# EUROPEAN PATENT SPECIFICATION

(11) **EP 1 669 785 B1**
(45) Date of publication and mention of the grant of the patent: **28.09.2011**
(21) Application number: 04771148.6
(22) Date of filing: 03.08.2004
(51) Int. Cl.: G02B 7/28, G03B 3/00, G03B 17/12, G03B 17/14

(54) **CAMERA, INTERCHANGEABLE LENS, INTERMEDIATE ADAPTER, AND CAMERA SYSTEM INCLUDING THEM**
KAMERA, WECHSELBARE LINSE, ZWISCHENADAPTER UND KAMERASYSTEM DAMIT
APPAREIL PHOTO, LENTILLE INTERCHANGEABLE, ADAPTATEUR INTERMEDIAIRE ET SYSTEME D'APPAREILS PHOTO COMPRENANT CES ELEMENTS.

(30) Priority: 12.08.2003 JP 2003292267
(43) Date of publication of application: 14.06.2006
(73) Proprietor: Olympus Corporation, Tokyo 151-0072 (JP)
(72) Inventor: MIYASAKA, Tetsuo, 2-3 Kuboyama-cho, Hachioji-shi, Tokyo (JP)
(74) Representative: Winter, Brandl, Fürniss, Hübner, Röss, Kaiser, Polte - Partnerschaft
(86) International application number: PCT/JP2004/011094
(87) International publication number: WO 2005/015282

(56) References cited:
- EP-A- 0 443 463
- JP-A- 2 083 510
- JP-A- 3 240 029
- JP-A- 4 093 824
- JP-A- 9 120 026
- JP-A- 63 141 030
- JP-A- 63 199 330
- JP-A- 63 200 132
- US-A- 4 881 094
- US-A- 4 912 494
- US-A- 5 172 154

## Description

### Technical Field

The present invention relates to a technology of correcting the AF action of a camera in response to a degree of spherical aberration of a camera lens, and particularly to a camera equipped with an AF sensing unit of TTL phase difference type, an interchangeable lens, an intermediate adapter, and a camera system including the same.

### Background Art

It happens that a camera equipped with a TTL phase difference type AF sensing unit yields out-of-focus images when shooting at full open aperture in spite of the lens being adjustably focused on the basis of focusing data detected by the AF sensing unit. This results from a difference in the spherical aberration of the camera lens between a F-number of a full-open aperture and a F-number of AF sensing aperture for measuring the focal point, which thus dislocates the best imaging plane.

Disclosed in Jpn. Pat. Appln. KOKAI Publication No. 59-208514 is a technique of correcting the output of the AF sensing unit with displacement correcting data of the best imaging plane (referred to as "AF correcting data" hereinafter) which has been decided from a difference in the spherical aberration between two F-numbers and stored in the camera lens.

A lens interchangeable camera has an intermediate adapter provided between the camera and the interchangeable lens for modifying the focal length. The intermediate adapter may be known as a telescopic converter for lengthening the focal length. When mounted on the camera, the spherical aberration of the intermediate adapter as well as the spherical aberration of the camera lens has to be concerned for affecting the focal length.

Disclosed in Jpn. Pat. Appln. KOKAI Publication No. 4-93824 is a technique of correcting the output of the AF sensing unit through using a combination of the two AF correcting data stored in the interchangeable lens and the intermediate adapter respectively.

However, the technique disclosed in the Jpn. Pat. Appln. KOKAI Publication No. 4-93824 permits two AF correcting data stored in the interchangeable lens and the intermediate adapter respectively to be simply combined. Hence, a combination of the interchangeable lens and the intermediate adapter is deficient for improving the accuracy of AF control. For increasing the accuracy of the AF control, the AF correcting data shall preferably be decided on the basis of optical characteristics over a combination of the interchangeable lens and the intermediate adapter.

Document US 4,912,494 A describes a camera system, which has an interchangeable lens releasably attached to a camera body, an information processing portion provided in the camera body, and another information processing portion provided in the interchangeable lens. The information processing portion of the interchangeable lens discriminates the attachment of photographic supplementary means and communicates with the information processing portion in the camera body to set a photographic condition.

Document US 5,172,154 A describes a camera, which is provided with a rear conversion lens barrel interposed between an interchangeable photo-taking lens barrel, a camera body comprising a focus detecting apparatus for detecting the amount of deviation of the image plane and a first converting device for correcting the amount of deviation of the image plane detected by the focus detecting apparatus, an interchangeable photo-taking lens barrel disposed forwardly of the camera body and having an interchangeable photo-taking lens and a first memory for storing therein data regarding the exit pupil position from the focal plane of the interchangeable photo-taking lens, a rear conversion lens barrel interposed between the interchangeable photo-taking lens barrel and the camera body and having a rear conversion lens and a second memory for storing therein data regarding the magnification and focal length of the rear conversion lens, and a second converting device for reading the data of the first and second memories and calculating the combined exit pupil position from the focal plane of the combined system of the rear conversion lens and the interchangeable photo-taking lens.

Document US 4, 881,094 A describes a camera system, which includes a camera body, an interchangeable lens mountable on the camera body and outputting a discrimination signal, and an intermediate barrel mountable between the interchangeable lens and the camera body. The intermediate barrel has memory means storing therein a plurality of information data regarding the optical characteristic, selector means responsive to the discrimination signal to select one of the plurality of information data from among the plurality of information data, and output means for outputting an information signal confirming to the selected one of said plurality of information data to the camera body.

### Disclosure of Invention

An object of the present invention is hence to provide a camera, an interchangeable lens, and a camera system including the same, where the action of high-precision AF control can be conducted with the lens interchangeable type camera which is equipped with a TTL phase difference type AF sensor and set by an intermediate adapter to the interchangeable lens.

The object is solved by the features of independent claim 1. The dependent claims are directed to preferred embodiments of the invention.

Accordingly, the action of high-precision AF control can be conducted when the camera is set to a combination of the interchangeable lens and the intermediate adapter.

### Brief Description of Drawings

FIG. 1 is a block diagram showing an arrangement of a camera system.
FIG. 2 is a view showing a first variation of the camera system lying outside the scope of the present invention.
FIG. 3 is a view showing a second variation of the camera system according to the present invention.
FIG. 4 is a view showing a third variation of the camera system lying outside the scope of the present invention.
FIG. 5 is a flowchart schematically showing a procedure of the camera CPU receiving the lens information.
FIG. 6 is a flowchart schematically showing a procedure of the camera CPU calculating a focusing error correcting data for correct focusing.

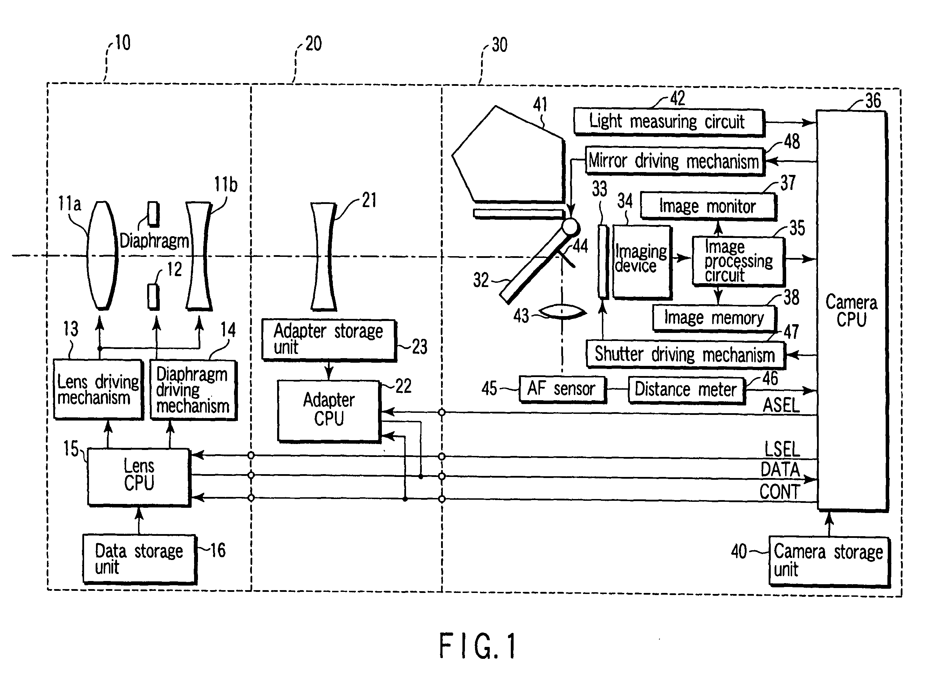

Best Mode for Carrying Out the Invention FIG. 1 is a block diagram showing a typical arrangement of a camera system.

The camera system consists mainly of an interchangeable lens 10, an intermediate adapter 20, and a camera body unit 30. The interchangeable lens 10, the intermediate adapter 20, and the camera body unit 30 are detachably joined together by mounting fittings (not shown).

The interchangeable lens 10 includes camera lenses 11a and 11b, a diaphragm 12, a lens driving mechanism 13, a diaphragm driving mechanism 14, a lens CPU 15, and a data storage unit 16.

The lens CPU 15 is provided for exclusively controlling the action of the interchangeable lens 10. More particularly, its control signal is received by the lens driving mechanism 13 which in turn drives the camera lenses 11a and 11b forward and backward for focusing. The control signal is also received by the diaphragm driving mechanism 14 which in turn drives the diaphragm 12 for exposure control. Moreover, the lens CPU 15 exchanges signals of various information with the camera body unit 30.

The data storage unit 16 is provided for storage of specific information about the lens unit.

The intermediate adapter 20 includes a telescopic lens 21, an adapter CPU 22, and an adapter storage unit 23.

The telescopic lens 21 is provided for varying the focal length of the interchangeable lens 10. The magnification of the lens can thus be increased, for example, two times by the movement of the telescopic lens 21.

The adapter storage unit 23 is provided for storage of specific information about the intermediate adapter (for example, the type of lens or the AF correcting data). The adapter CPU 22 is provided for exchanging signals with the camera body unit 30 to transmit specific information about the intermediate adapter for AF correcting action.

The camera body unit 30 consists mainly of a quick return mirror 32, a shutter 33, an imaging device 34, an image processing circuit 35, a camera CPU 36, an image monitor 37, an image memory 38, a camera storage unit 40, a pentagonal prism 41, a light measuring circuit 42, an AF lens 43, a sub mirror 44, an AF sensor 45, a distance meter 46, a shutter driving mechanism 47, and a mirror driving mechanism 48.

The quick return mirror 32 has a half mirror provided at the center thereof for transmitting an optical image of the object to the pentagonal prism 41 and the AF sensor 45 in a non-shooting mode. The imaging device 34 converts the optical image of the object into an electric signal of image data using, for example, CCD. The camera CPU 36 is provided for exclusively controlling the action of the camera system and subjecting the image data to a variety of processing actions by controlling the image processing circuit 35. A group of data required for operating the camera CPU 36 is stored in the camera storage unit 40.

The camera CPU 36 also communicates with the lens CPU 15 in the interchangeable lens 10 and the adapter CPU 22 in the intermediate adapter 20 for receiving the characteristic information of the camera lenses 11a and 11b and the AF correcting information respectively.

There are provided four signal lines ASEL, LSEL, DATA, and CONT for exchanging the information. The signal line ASEL is provided for selectively supplying the intermediate adapter 20 with its desired information. The signal line LSEL is provided for selectively supplying the interchangeable lens 10 with its desired information. The signal line DATA is a common line for supplying the CPUs with the lens characteristic information. The signal line CONT is provided for supplying the CPUs with control signals (for example, a demand for lens information or a command for diaphragm driving) from the camera CPU.

The image monitor 37 may be a liquid crystal display monitor or the like and is provided for displaying an image data. The image memory 38 is provided in the form of a recording medium, such as Smart Media (registered trademark), in which the image data is recorded.

The light measuring circuit 42 is provided for receiving with its optoelectric converter element (not shown) a reflection of the optical image from the pentagonal prism 41 to measure the brightness of the object to be imaged. The camera CPU 36 calculates exposure conditions from the measurement of the brightness. The AF sensor 45 is provided for receiving the optical image of the object divided in two by the sub mirror 44 and passed through the AF lens 43. The distance meter 46 is provided for calculating from an output of the AF sensor 45 the movement of the lens for correct focusing. The AF distance meter is of so-called TTL phase difference type in which the flux of light used for measuring the focal point is equivalent to the one with the camera lens aperture stopped down to F8.

Then, the action of the camera system will be described.

The action starts with a photographer pressing down the release button (not shown) on the camera body unit 30 to its first position. The camera CPU 36 then calculates the aperture value for an appropriate exposure from brightness of a object to be shot measured by the light measuring circuit 42, and the result is received by the lens CPU 15. The lens CPU 15 provides the diaphragm driving mechanism 14 with its output signal for obtaining a desired size of the aperture.

Also, the camera CPU 36 calculates from the measurement of the distance meter 46, the lens information from the interchangeable lens 10, and the lens information from the intermediate adapter 20 the movement of the camera lenses 11a and 11b which is then received by the lens CPU 15 for correct focusing. In response to the movement data, the lens CPU 15 provides the lens driving mechanism 13 with a control signal for moving the camera lenses 11a and 11b to their correct focusing positions.

When the photographer presses down the release button (not shown) on the camera body unit 30 to its second position, the camera CPU 36 retracts the quick return mirror 32 from the optical path of the camera and actuates the shutter 33 for directing the optical image of the object to the imaging device 34 and subjects the image data output of the imaging device 34 to relevant image processing actions. The image processing actions of the camera CPU 36 including color correction are carried out based on the lens information from the interchangeable lens 10 and the lens information from the intermediate adapter 20.

The camera system of the present invention including the interchangeable lens 10, the intermediate adapter 20, and the camera body unit 30 shown in FIG. 1 is arranged operable in three different variations described below.

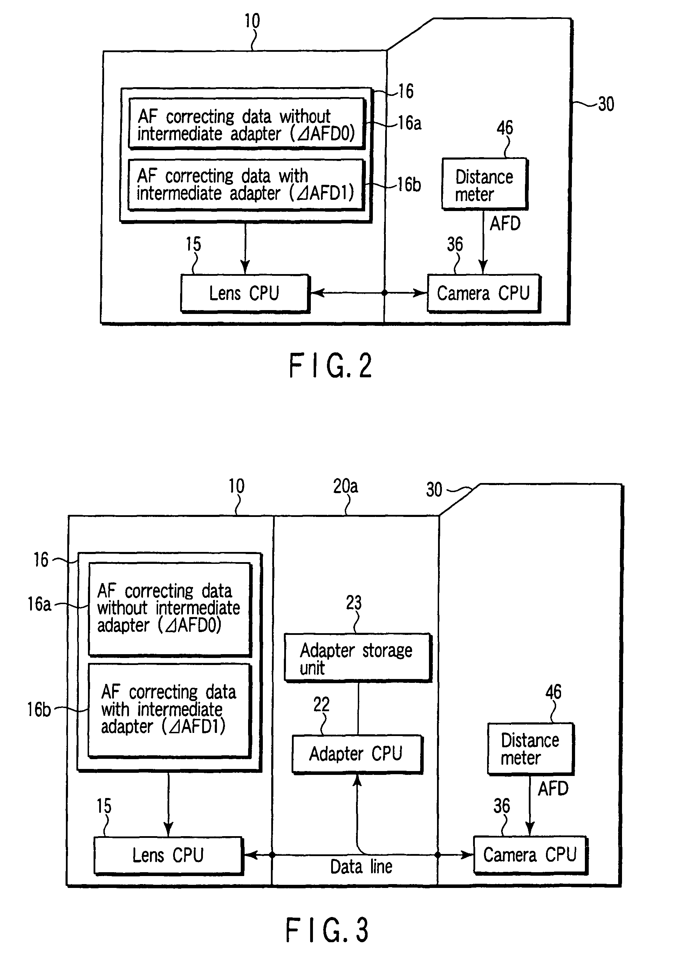

FIG. 2 illustrates the first variation of the camera system lying outside the scope of the present invention. The first variation of the camera system employs the interchangeable lens 10 and the camera body unit 30.

In the data storage unit 16, the AF correcting data is saved as a combination of a first AF correcting data 16a (ΔAFD0) without the intermediate adapter 20 and a second AF correcting data 16b (ΔAFD1) with the intermediate adapter 20.

Accordingly, as the camera CPU 36 corrects the measurement of focusing error (AFD) of the distance meter 46 calculated by TTL phase difference technique with the AF correcting data, the movement amount of the camera lens for correct focusing is transmitted to the lens CPU 15.

FIG. 3 illustrates the second variation of the camera system forming the present invention. The second variation of the camera system employs the interchangeable lens 10, a type A intermediate adapter 20 (a first intermediate adapter) 20a, and the camera body unit 30. The type A intermediate adapter 20a means an initial version of the intermediate adapter.

In the data storage unit 16, the AF correcting data is saved as a combination of an AF correcting data 16a (ΔAFD0) without the intermediate adapter 20 and an AF correcting data 16b (ΔAFD1) with the type A intermediate adapter 20a. The type A intermediate adapter 20a includes an adapter CPU 22a and an adapter storage unit 23a. The adapter storage unit 23a holds a specific information about the intermediate adapter 20a but not the AF correcting data.

Accordingly, as the camera CPU 36 corrects the measurement of focusing error (AFD) of the distance meter 46 calculated by TTL phase difference technique with the AF correcting data, the movement amount of the camera lens for correct focusing is transmitted to the lens CPU 15.

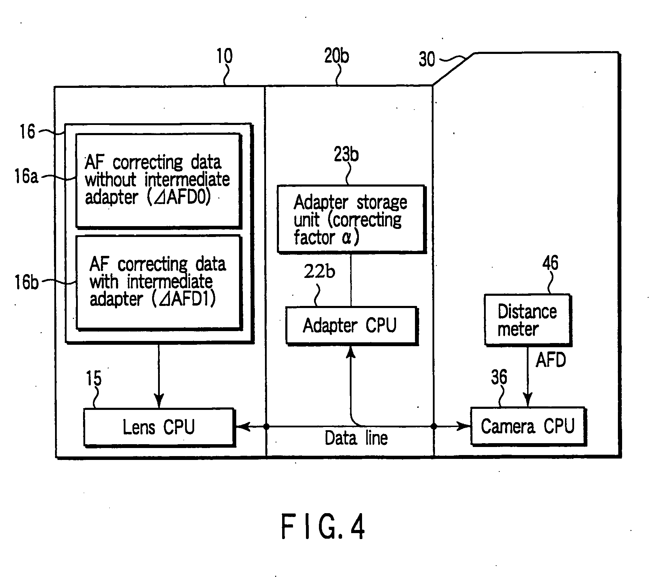

FIG. 4 illustrates a third variation of the camera system lying outside the scope of the present invention. The third variation of the camera system employs the interchangeable lens 10, a type B intermediate adapter (a second intermediate adapter) 20b, and the camera body unit 30. The type B intermediate adapter 20b means an improved version of the type A intermediate adapter 20a.

In the data storage unit 16, the AF correcting data is saved as a combination of an AF correcting data 16a (ΔAFD0) without the intermediate adapter 20 and an AF correcting data 16b (ΔAFD1) with the type A intermediate adapter 20a. The type B intermediate adapter 20b includes an adapter CPU 22b and an adapter storage unit 23b. The adapter storage unit 23b holds a correction factor α or third data used for converting the AF correction data for the type A intermediate adapter 20a into an AF correction data for the type B intermediate adapter 20b.

Accordingly, as the camera CPU 36 corrects the measurement of focusing error (AFD) of the distance meter 46 calculated by TTL phase difference technique with the AF correcting data, the movement amount of the camera lens for correct focusing is transmitted to the lens CPU 15.

The action of the camera system for AF correction has mainly two steps:
(1) the camera CPU 36 in the camera body unit 30 receiving the lens information from both the interchangeable lens 10 and the intermediate adapter 20; and
(2) the camera CPU 36 in the camera body unit 30 calculating the movement of the lenses for correct focusing.

The two steps will now be described in more detail. The camera CPU 36 is designed for functioning with the three different variations of the camera system.

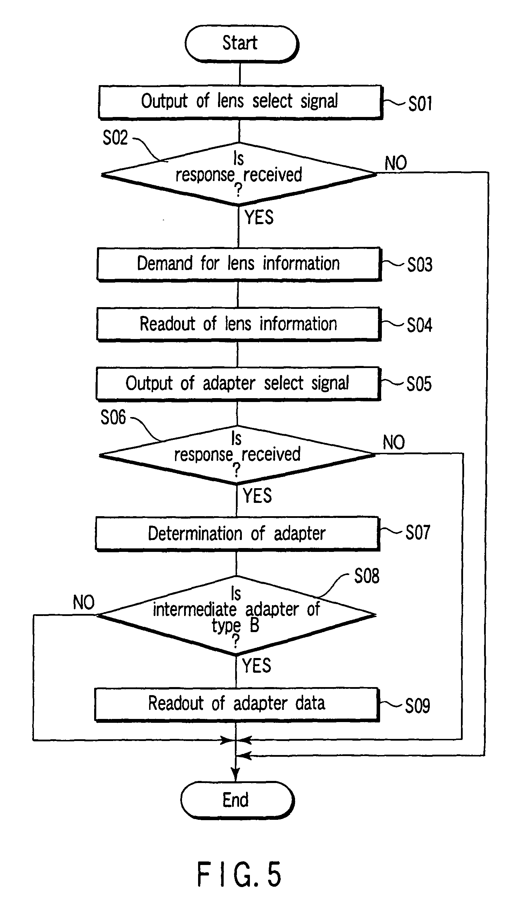

FIG. 5 is a flowchart schematically showing a procedure of the camera CPU 36 receiving the lens information. The procedure starts when the camera body unit 30 is switched on or set to the interchangeable lens 10 and the intermediate adapter 20.

In step S01, the camera CPU 36 dispatches a lens select signal for receiving the lens information from the interchangeable lens 10. More particularly, the signal line LSEL is turned from a low level to a high level. It is then examined in step S02 whether or not a response is received from the interchangeable lens 10. When the signal line is conducted, the lens CPU 15 releases a response signal indicating that the interchangeable lens 10 is ready for starting the communication.

When it is determined "no" in step S02, i.e., no response is received from the interchangeable lens 10, the camera CPU 36 ends the action.

When it is determined "yes" in step S02, i.e., a response is received from the interchangeable lens 10, the action advances to Step S03 where the camera CPU 36 demands to receive the lens information. More specifically, the signal line CONT is conducted for transmitting a lens information demand signal. Upon receiving the demand signal, the lens CPU 15 retrieves the lens information from the data storage unit 16 and transmits the same to the camera CPU.

The lens information to be transmitted may include the type of lens, the F-number at full opening, and the AF correcting data (ΔAFD0 and ΔAFD1). In step S04, the lens information is received by the camera CPU 36 and saved in the camera storage unit 40.

This is followed by Step S05 where an adapter select signal for receiving the adapter information from the intermediate adapter 20 is dispatched from the camera CPU 36. More particularly, the signal line ASEL is turned from a low level to a high level. It is examined in step S06 whether or not a response is received from the intermediate adapter 20. When the signal line is conducted, the adapter CPU 22 releases a response signal indicating that the intermediate adapter 20 is ready for starting the communication.

When it is determined "no" in step S06, i.e., no response is received from the intermediate adapter 20, the camera CPU 36 ends the action of the camera system having an arrangement shown in FIG. 2.

When it is determined "yes" in step S06, i.e., a response is received from the intermediate adapter 20, the action advances to Step S07 where the camera CPU 36 checks the response to identify the type of the intermediate adapter. In other words, the camera CPU 36 examines whether or not the intermediate adapter is of the type B.

When it is determined "no" in step S08, i.e., the intermediate adapter is of not the type B but the type A such as shown in FIG. 3, the camera CPU 36 ends the action as having received the lens correction data (ΔAFD1).

When it is determined "yes" in step S08, i.e., the intermediate adapter is of the type B such as shown in FIG. 4, the camera CPU 36 demands to receive the adapter information. More specifically, the signal line CONT is conducted for transmitting an adapter data demand signal. Upon receiving the demand signal, the adapter CPU 22b retrieves the adapter information from the adapter storage unit 23b and transmits the same to the camera CPU 36.

The adapter data may to be transmitted include the correction factor α. In step S09, the adapter data is received by the camera CPU 36 and saved in the camera storage unit 40.

Through conducting the above described procedure, the camera CPU 36 can receive and save the AF correcting data corresponding to each variation of the camera system arrangement in the camera storage unit 40.

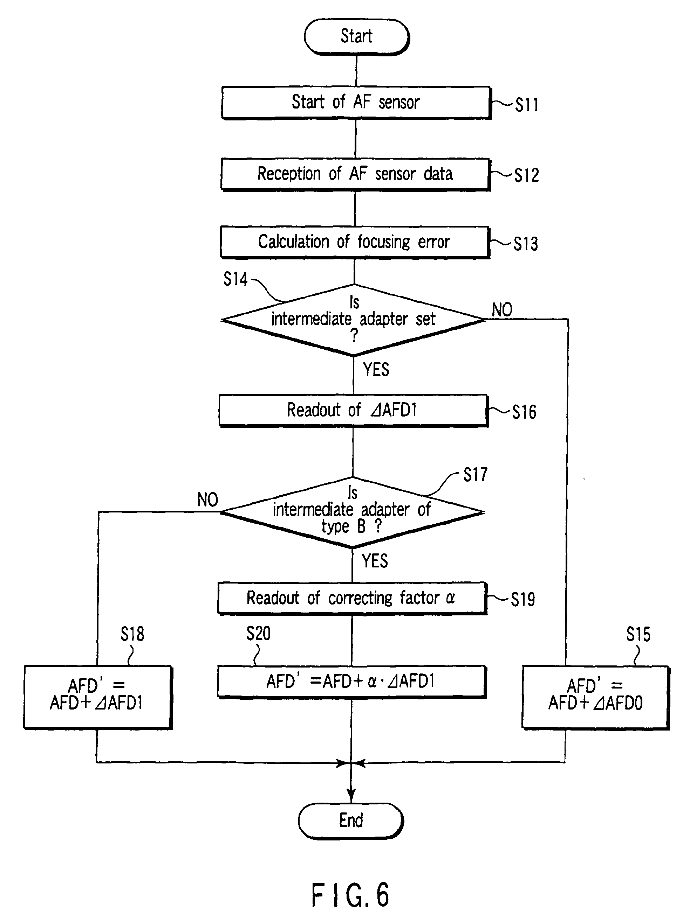

FIG. 6 is a flowchart schematically showing a procedure of the camera CPU 36 calculating the focusing error for correct focusing. The procedure involves steps of the AF controlling action initiated prior to shooting action by the photographer pressing down the release button (not shown) on the camera body unit 30.

In step S11, the camera CPU 36 dispatches a command for starting the action of the AF sensor 45. In step S12, a measurement of focusing error (the number of pitches across the sensor surface) is received from the AF sensor 45. In step S13, the distance meter 46 calculates the focusing error (AFD) of the camera lenses 11a and 11b from the measurement of the number of pitches.

This is followed by step S14 where the camera CPU 36 examines whether the intermediate adapter 20 is set or not.

When it is determined "no" in step S14, i.e., the intermediate adapter 20 is not set in the camera system shown in FIG. 2, the procedure goes to step S15 where the camera CPU 36 adds the measurement of focusing error (AFD) from the distance meter 46 with the AF correcting data (ΔAFD0) 16a to obtain a focusing error (AFD') at no presence of the intermediate adapter 20.

When it is determined "yes" in step S14, i.e., the intermediate adapter 20 is set, the procedure goes to Step S16 where the camera CPU 36 retrieves the AF correcting data (ΔAFD1) 16b at the presence of the intermediate adapter 20 from the camera storage unit 40.

In step S17, the camera CPU 36 accesses the camera storage unit 40 and examines whether the intermediate adapter is of the type B or not.

When it is determined "no" in step S17, i.e., the intermediate adapter is of not the type B but the type A and the camera system is as shown in FIG. 3 where the camera CPU 36 has received the AF correcting data (ΔAFD1) 16b, the procedure goes to Step S18. In step S18, the camera CPU 36 adds the measurement of focusing error (AFD) from the distance meter 46 with the AF correcting data (ΔAFD1) 16b to obtain a focusing error (AFD') at the presence of the intermediate adapter 20.

When it is determined "yes" in step S17, i.e., the intermediate adapter is of the type B and the camera system is as shown in FIG. 4, the procedure goes to Step S19. In step S19, the camera CPU 36 retrieves the correcting factor α from the camera storage unit 40. This is followed by Step S20 where the camera CPU 36 adds the measurement of focusing error (AFD) from the distance meter 46 with a multiplication of the AF correcting data (ΔAFD1) 16b by the correcting factor α to obtain a focusing error (AFD') at the presence of the intermediate adapter 20.

Finally, the corrected focusing error (AFD') is transmitted from the camera CPU 36 to the lens CPU 15 where it is used for driving the camera lenses 11a and 11b to focus correctly.

The calculation of the corrected focusing error (AFD') in step S20 is not limited to the multiplication of the AF correcting data (ΔAFD1) 16b by the correcting factor α but may involve addition (or subtraction) of the AF correcting data (ΔAFD1) 16b with the correcting factor α or use a function in which the AF correcting data (ΔAFD1) 16b and the correcting factor α are parameters.

It is also possible for the camera CPU 36 to receive the AF correcting data (ΔAFD1) 16b and the correcting factor α to be used for AF correcting action not from the interchangeable lens 10 and the intermediate adapter 20 respectively but from any appropriate external peripheral (for example, a server) over a communicating means.

While the foregoing embodiment includes different stages, it is understood that various modifications are made by different combinations of the stages or disclosed members of the embodiment.

### Industrial Applicability

The present invention is widely applicable to the industry for manufacturing cameras, interchangeable lens, intermediate adapters, and camera systems including the same where the action of high-precision AF control can be conducted.

## Claims

1. A camera system comprising a camera body (30) and an interchangeable lens (10) detachably attached to the camera body (30), and an autofocus apparatus (45, 46) which is installed in the camera body (30) and suitable for detecting a focusing error of the interchangeable lens (10) the camera system comprising:
a first intermediate adapter (20) detachably attached between the camera body (30) and the interchangeable lens (10) in order to modify the optical characteristics of the interchangeable lens (10);
a data storage unit (16) which is installed in the interchangeable lens (10) and which is suitable for storing first data only depending on the optical characteristics of the interchangeable lens (10); and
a camera central processing unit (36) installed in the camera body (30), the camera central processing unit (36) being suitable for correcting the detection result of focusing error received from the autofocus apparatus (45, 46) by using the first data when the first intermediate adapter (20) is not attached, and being suitable for correcting the detection result of focusing error received from the autofocus apparatus (45, 46) by using second data when the first intermediate adapter (20) is attached; a camera central storage unit (40) installed in the camera body (30); and
a lens processing unit (15) installed in the interchangeable lens (10); **characterized in that**
the first data is first autofocus correcting data, and the second data is second autofocus correcting data;
said autofocus apparatus is a through the lens phase difference autofocus apparatus;
said data storage unit (16) is further suitable to store said second autofocus correcting data depending on the optical characteristics of a combination of the interchangeable lens (10) and the first intermediate adapter (20);
the lens central processing unit (15) is provided such that when the camera body (30) is switched on or when the interchangeable lens (10) and the first intermediate adapter (20) are attached, the lens central processing unit (15) retrieves the first and second autofocus correcting data from the data storage unit (16) in response to a demand from the camera central processing unit (36) and transmits the first and second autofocus correcting data to the camera central processing unit (36), and the camera central processing unit (36) stores the received first and second autofocus correcting data in the camera storage unit (40);
said camera central processing unit (36) being adapted to retrieve the first autofocus correcting data from the camera storage unit (40) and using the first autofocus correcting data, when the first intermediate adapter (20) is not attached, and
said camera central processing unit (36) being adapted to retrieve the second autofocus correcting data from the camera storage unit (40) and using the second autofocus correcting data, when the first intermediate adapter (20) is attached.

2. A camera system according to claim 1, wherein the camera central processing unit (36) has a function of determining whether the first intermediate adapter (20) is attached or not.

3. A camera system according to claim 1, wherein the first intermediate adapter (20) includes a first adapter central processing unit (22), the first adapter central processing unit (22) being arranged to communicate with the camera central processing unit (36).

4. A camera system according to claim 3, wherein the camera central processing unit (36) determines that the first intermediate adapter (20) is attached when its communication with the first adapter central processing unit (22) is enabled.

5. A camera system according to claim 1, wherein the camera central processing unit (36) corrects with the first or second autofocus correcting data a difference between the optimum focal point corresponding to the full F/stop aperture of the interchangeable lens (10) and the optimum focal point corresponding to a desired F/stop aperture of the through-the-lens phase difference type autofocus apparatus (45, 46).

## Patentansprüche

1. Kamerasystem mit einem Kamerakörper (30) und einer austauschbaren Linse (10), die entfernbar an dem Kamerakörper (30) angebracht ist, und einer Autofokusvorrichtung (45, 46), die in dem Kamerakörper (30) installiert ist und zum Erfassen eines Fokussierfehlers der austauschbaren Linse (10) geeignet ist, wobei das Kamerasystem aufweist:
einen ersten Zwischenadapter (20), der entfernbar zwischen dem Kamerakörper (30) und der austauschbaren Linse (10) angebracht ist, um die optischen Charakteristika der austauschbaren Linse (10) zu modifizieren;
eine Datenspeichereinheit (16), die in der austauschbaren Linse (10) installiert ist und zum Speichern von ersten Daten nur in Abhängigkeit von den optischen Eigenschaften der austauschbaren Linse (10) geeignet ist; und
eine Kamera-Zentralverarbeitungseinheit (36), die in dem Kamerakörper (30) installiert ist, wobei die Kamera-Zentralverarbeitungseinheit (36) zum Korrigieren des Erfassungsergebnisses eines Fokussierfehlers, das von der Autofokusvorrichtung (45, 46) empfangen wird, unter Verwendung der ersten Daten geeignet ist, wenn der erste Zwischenadapter (20) nicht angebracht ist, und zum Korrigieren des Erfassungsergebnisses eines Fokussierfehlers, das von der Autofokusvorrichtung (45, 46) empfangen wird, unter Verwendung von zweiten Daten geeignet ist, wenn der erste Zwischenadapter (20) angebracht ist;
eine Kameraspeichereinheit (40), die in dem Kamerakörper (30) installiert ist; und
eine Linsen-Zentralverarbeitungseinheit (15), die in der austauschbaren Linse (10) installiert ist,
**dadurch gekennzeichnet, dass**
die ersten Daten erste Autofokuskorrekturdaten und die zweiten Daten zweite Autofokuskorrekturdaten sind;
die Autofokusvorrichtung eine Innenmessung-Phasendifferenzautofokusvorrichtung ist;
die Datenspeichereinheit (16) außerdem ausgelegt ist, die zweiten Autofokuskorrekturdaten in Abhängigkeit von den optischen Eigenschaften einer Kombination aus der austauschbaren Linse (10) und dem ersten Zwischenadapter (20) zu speichern;
die Linsen-Zentralverarbeitungseinheit (15) derart vorgesehen ist, dass, wenn der Kamerakörper (30) eingeschaltet ist oder wenn die austauschbare Linse (10) und der erste Zwischenadapter (20) angebracht sind, die Linsen-Zentralverarbeitungseinheit (15) die ersten und zweiten Autofokuskorrekturdaten aus der Datenspeichereinheit (16) als Antwort auf eine Anforderung von der Kamera-Zentralverarbeitungseinheit (36) holt und die ersten und zweiten Autofokuskorrekturdaten an die Kamera-Zentralverarbeitungseinheit (36) überträgt, und die Kamera-Zentralverarbeitungseinheit (36) die empfangenen ersten und zweiten Autofokuskorrekturdaten in der Kameraspeichereinheit (40) speichert;
die Kamera-Zentralverarbeitungseinheit (36) ausgelegt ist, die ersten Autofokuskorrekturdaten von der Kameraspeichereinheit (40) zu holen und die ersten Autofokuskorrekturdaten zu verwenden, wenn der erste Zwischenadapter (20) nicht angebracht ist, und
die Kamera-Zentralverarbeitungseinheit (36) ausgelegt ist, die zweiten Autofokuskorrekturdaten von der Kameraspeichereinheit (40) zu holen und die zweiten Autofokuskorrekturdaten zu verwenden, wenn der erste Zwischenadapter (20) angebracht ist.

2. Kamerasystem nach Anspruch 1, wobei die Kamera-Zentralverarbeitungseinheit (36) eine Funktion zum Bestimmen, ob der erste Zwischenadapter (20) angebracht ist, aufweist.

3. Kamerasystem nach Anspruch 1, wobei der erste Zwischenadapter (20) eine erste Adapter-Zentralverarbeitungseinheit (22) enthält, wobei die erste Adapter-Zentralverarbeitungseinheit (22) ausgelegt ist, mit der Kamera-Zentralverarbeitungseinheit (36) zu kommunizieren.

4. Kamerasystem nach Anspruch 3, wobei die Kamera-Zentralverarbeitungseinheit (36) bestimmt, dass der erste Zwischenadapter (20) angebracht ist, wenn ihre Kommunikation mit der ersten Adapter-Zentralverarbeitungseinheit (22) möglich ist.

5. Kamerasystem nach Anspruch 1, wobei die Kamera-Zentralverarbeitungseinheit (36) mit den ersten und zweiten Autofokuskorrekturdaten eine Differenz zwischen dem optimalen Fokuspunkt, der der vollständigen F/Stopp-Apertur der austauschbaren Linse (10) entspricht, und dem optimalen Fokuspunkt, der einer gewünschten F/Stopp-Apertur der Innenmessung-Phasendifferenzautofokusvorrichtung (45, 46) entspricht, korrigiert.

## Revendications

1. Système d'appareil photographique comprenant un corps d'appareil photographique (30) et un objectif interchangeable (10) fixé de manière détachable au corps d'appareil photographique (30), et un appareil autofocus (45, 46) qui est installé dans le corps d'appareil photographique (30) et approprié pour détecter une erreur de mise au point de l'objectif interchangeable (10), le système d'appareil photographique comprenant :
un premier adaptateur intermédiaire (20) fixé de manière détachable entre le corps d'appareil photographique (30) et l'objectif interchangeable (10) afin de modifier les caractéristiques optiques de l'objectif interchangeable (10) ;
une unité de mémorisation de données (16) qui est installée dans l'objectif interchangeable (10) et qui est appropriée pour mémoriser des premières données uniquement en fonction des caractéristiques optiques de l'objectif interchangeable (10) ; et
une unité centrale d'appareil photographique (36) installée dans le corps d'appareil photographique (30), l'unité centrale d'appareil photographique (36) étant appropriée pour corriger le résultat de détection d'erreur de mise au point reçu de l'appareil autofocus (45, 46) en utilisant les premières données lorsque le premier adaptateur intermédiaire (20) n'est pas fixé, et qui est appropriée pour corriger le résultat de détection d'erreur de mise au point reçu de l'appareil autofocus (45, 46) en utilisant des deuxièmes données lorsque le premier adaptateur intermédiaire (20) est fixé ;
une unité de mémorisation d'appareil photographique (40) installée dans le corps d'appareil photographique (30) ; et
une unité centrale d'objectif (15) installée dans l'objectif interchangeable (10) ;
**caractérisé en ce que**
les premières données sont des premières données de correction d'autofocus, et les deuxièmes données sont des deuxièmes données de correction d'autofocus ;
ledit appareil autofocus est un appareil autofocus à différence de phase à travers l'objectif ;
ladite unité de mémorisation de données (16) est en outre appropriée pour mémoriser lesdites deuxièmes données de correction d'autofocus en fonction des caractéristiques optiques d'une combinaison de l'objectif interchangeable (10) et du premier adaptateur intermédiaire (20) ;
l'unité centrale d'objectif (15) est prévue de sorte que lorsque le corps d'appareil photographique (30) est activé ou lorsque l'objectif interchangeable (10) et le premier adaptateur intermédiaire (20) sont fixés, l'unité centrale d'objectif (15) récupère les premières et deuxièmes données de correction d'autofocus dans l'unité de mémorisation de données (16) en réponse à une demande provenant de l'unité centrale d'appareil photographique (36) et transmet les premières et deuxièmes données de correction d'autofocus à l'unité centrale d'appareil photographique (36), et l'unité centrale d'appareil photographique (36) mémorise les premières et deuxièmes données de correction d'autofocus reçues dans l'unité de mémorisation d'appareil photographique (40) ;
ladite unité centrale d'appareil photographique (36) étant conçue pour récupérer les premières données de correction d'autofocus dans l'unité de mémorisation d'appareil photographique (40) et utilisant les premières données de correction d'autofocus, lorsque le premier adaptateur intermédiaire (20) n'est pas fixé, et
ladite unité centrale d'appareil photographique (36) étant conçue pour récupérer les deuxièmes données de correction d'autofocus dans l'unité de mémorisation d'appareil photographique (40) et utilisant les deuxièmes données de correction d'autofocus, lorsque le premier adaptateur intermédiaire (20) est fixé.

2. Système d'appareil photographique selon la revendication 1, dans lequel l'unité centrale d'appareil photographique (36) a une fonction pour déterminer si le premier adaptateur intermédiaire (20) est fixé ou non.

3. Système d'appareil photographique selon la revendication 1, dans lequel le premier adaptateur intermédiaire (20) comprend une première unité centrale d'adaptateur (22), la première unité centrale d'adaptateur (22) étant agencée pour communiquer avec l'unité centrale d'appareil photographique (36).

4. Système d'appareil photographique selon la revendication 3, dans lequel l'unité centrale d'appareil photographique (36) détermine que le premier adaptateur intermédiaire (20) est fixé lorsque sa communication avec la première unité centrale d'adaptateur (22) est activée.

5. Système d'appareil photographique selon la revendication 1, dans lequel l'unité centrale d'appareil photographique (36) corrige, avec les premières ou les deuxièmes données de correction d'autofocus, une différence entre le foyer optimal correspondant à l'ouverture F/stop complète de l'objectif interchangeable (10) et le foyer optimal correspondant à une ouverture F/stop souhaitée de l'appareil autofocus du type à différence de phase à travers l'objectif (45, 46).
